(19) Europäisches Patentamt
European Patent Office
Office européen des brevets

(11) EP 1 686 101 B1

(12) **EUROPEAN PATENT SPECIFICATION**

(45) Date of publication and mention of the grant of the patent:
**07.05.2008 Bulletin 2008/19**

(51) Int Cl.:
***C04B 24/24*** *(2006.01)* ***C09K 8/467*** *(2006.01)*

(21) Application number: **05290210.3**

(22) Date of filing: **31.01.2005**

(54) **Cement retardant**

Zementverzögerer

Retardateur pour ciment

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**02.08.2006 Bulletin 2006/31**

(73) Proprietor: **RHODIA CHIMIE**
**92100 Boulogne Billancourt (FR)**

(72) Inventor: **Deblock, Elise**
**75004 PARIS (FR)**

(74) Representative: **Colombet, Alain André et al**
**Cabinet Lavoix,**
**2, Place d'Estienne d'Orves**
**75441 Paris Cedex 09 (FR)**

(56) References cited:
**EP-A- 0 177 308**
**WO-A-99/33763**
**WO-A-20/04024647**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a composition comprising at least one hydraulic binder, water and at least one polyoxyalkyleneamine alkylene phosphonate as a retardant additive.

The composition is of use in particular in the construction and civil engineering fields. The invention also relates to techniques for drilling oil, gas, water, geothermal or analogous wells or more specifically to cementing compositions very particularly suited to the cementing of areas which may be subjected to extreme dynamic stresses.

Whatever the fields of application, the cement compositions and the resulting hardened materials have to respectively exhibit appropriate rheological and mechanical properties. This is why the compositions do not comprise only a binder material, the reaction of which with water gives a hardened product, but also various additives, the role of which is to improve various mechanical and/or rheological characteristics, during processing and setting processing and optionally after.

The present invention relates in particular to controlling setting in cement slurries, in particular cement slurries used in drilling wells in the oil field area.

After drilling operation, the walls of drilling wells often need to be consolidated. This is done by introducing a casing or a coiled tubing into the well. Then a volume of a water slurry of a hydraulic cement is placed into the annular space between the walls of the well bore and the exterior of the casing. The cement permits to solidify through the formation of an annular sheath of hardened cement. The objective of the sheath includes physical support and positioning of the casing in the borehole. Also, it prevents the unwanted passage of the fluids and/or fine solids and/or gas into or from undesirable locations in the formation or well bore.

The cement slurry is usually prepared outside the well by mixing hydraulic cement with water and other additives. The cement slurry is then injected into the well and positioned against the wall to be consolidated.

The management of the setting time is critical. Usually, a quick setting time is required in order to consolidate as quickly as possible the well and to minimize the stop of the drilling operation. In the same time, the preparation of the cement slurry is generally conducted outside the well. Therefore, the cement slurry has to remain liquid until placed correctly onto the walls.

The setting time can be managed through the use of accelerators or retardants. For Portland type cements, strongly alkaline solutions of silicates or aluminates are classically used as accelerators. Also, lignosulfates, hydroxycarboxylic acids such as citric acid, gluconic acid, polysaccharides or organophosphonate products are classically used as retardants.

The document WO 99/44962 discloses a retarding system for oilfield well cement comprising a salt or ethylenediamine tetra (methylene) phosphonic acid derivative, a phosphate and optionally further retardants.

The document WO 99/33763 discloses the use of polyoxyethylene phosphonic acid as a retarder for high alumina cement, in particular for temperatures of the order of 40°C.

EP 0 177 308 discloses a retarding additive for cementing compositions comprising an amino methylene phosphonate derivative with one or more aminomethylene phosphonate groups being linked to a hydrophilic core group such as an amine, an alkyl amine, a carboxy, an oxygen or an alcohol group.

In practice, the choice of a retardant is strongly related to the temperatures involved into the well and the other additives that are part of the slurry composition. Unfortunately, most of the retardants demonstrate efficiency on a narrow range of temperatures and an important sensitivity regarding their concentrations, operation and very specific for each slurry formulations.

The present invention relates in particular to a composition comprising a hydraulic binder, water and a polyoxyalkyleneamine alkylene phosphonate as a retardant additive.

According to a preferred embodiment, the polyoxyalkyleneamine alkylene phosphonate comprises at least one group of general formula (Ia) :

$$-[-OR^4-]_n-NR^7{}_{(2-a)}(-R^5-PO_3M_2)_a \qquad \text{(Ia)}$$

wherein :

- a is an average number of from above 0 to 2;
- $R^4$ and $R^5$, identical or different, are alkylene groups;
- $R^7$ is hydrogen or an alkyl group;
- M is hydrogen or a monovalent cation; and
- n is an average number from 1 to 50.

Preferably, the polyoxyalkyleamine alkylene phosphonate has one of the following general formulae (Ib) or (Ic);

$$(M_2O_3P\text{-}R^5\text{-})_aR^7{}_{(2\text{-}a)}N\text{-}R^3\text{-}[OR^4\text{-}]_n\text{-}NR^7{}_{(2\text{-}a)}(\text{-}R^5\text{-}PO_3M_2)_a \quad (Ib)$$

$$R^8\text{-}[\text{-}OR^4\text{-}]_n\text{-}NR^7{}_{(2\text{-}a)}(\text{-}R^5\text{-}PO^3M_{2)a} \quad (Ic)$$

wherein:

- a, identical or different, is an average number of from above 0 to 2;
- $R^3$ to R $^5$ identical or different, are alkylene groups;
- $R^7$ is hydrogen or an alkyl group;
- $R^8$ is an alkyl group, preferably a methyl group;
- M is hydrogen or a monovalent cation; and
- n is an average number from 1 to 50.

The group $-[OR^4]_n-$ may have in particular the formula :

$$-[O\text{-}CH_2\text{-}CH_2]_n\text{-}$$

- $[O\text{-}CHR^a\text{-}CHR^b]_n$- wherein $R^a$ and $R^b$ are H or a methyl group, provided that one is H and the other is methyl;
- random or block having units $-[O\text{-}CH_2\text{-}CH_2]_{n'}$- and $-[O\text{-}CHR^a\text{-}CHR^b]_{n''}$-

wherein n'+n''=n

- such as block-$[O\text{-}CHR^a\text{-}CHR^b]_{n'''}\text{-}[O\text{-}CH_2\text{-}CH_2]_{n'}\text{-}[O\text{-}CHR^a\text{-}CHR^b]_{n''}$-

wherein n'+n''+n''' = n

- n', n'', n''' being average numbers.

Particularly preferred is a polyoxyalkyleneamine alkylene phosphonate according to general formula (1):

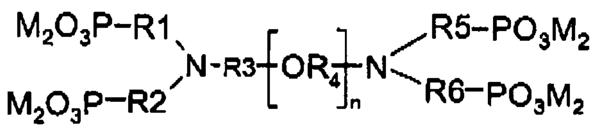

(I)

wherein :

$R^1$ to $R^6$, identical or different, are alkylene groups or a bond;
M is a monovalent metal cation, ammonium or hydrogen; and
n is an average number from 1 to 50.

Particularly preferred polyoxyalkyleneamine alkylene phosphonate of the general formula (I) (Ia) (Ib) (Ic), are those wherein :

- one or more of $R^1$, $R^2$, $R^5$ and $R^6$ is methylene;
- $R^3$ and/or $R^4$ is ethylene and/or propylene.

A further preferred polyoxyalkyleneamine alkylene phosphonate has the general formula (II)

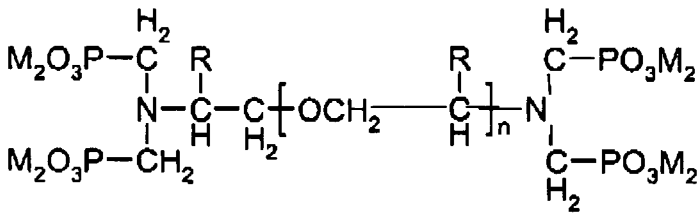

(II)

wherein:

M is as defined above, preferably an alkali metal ion or ammonium, in particular, M may be $Na^+$ or $NH_4^+$;
n is as defined above, preferably 1 to 20, and in particular 2 to 8; and
R, identical or different, is H or a methyl group.

The composition comprises preferably 0,001 to 0,05 gps active polyoxyalkyleneamine alkylene phosphonate.

The composition may further comprise a fluid-loss control agent. An appropriate fluid-loss control agent is a film forming agent, preferably a film forming polymer, such as a latex polymer, for example reticulated polyvinylalcohol.

The composition may further comprise at least one additive chosen from dispersants, antifreezers, water retainers, setting accelerators or retarders, or agents for controlling foaming.

The composition may include further other compounds or particles, notably in form of hollow or non hollow solid particles.

Such composition may preferably have a density of 0,9 $g/cm^3$ to 1,3 $g/cm^3$, and a ratio by volume of the liquid fraction to the solid fraction from 38 % to 50 %.

The composition is further preferably a fluid for cementing wells for the extraction of oil and/or gas.

In a preferred composition, the hydraulic binder is a cement, in particular a Portland cement. Such compositions have preferably a W/C ratio from 0,3 to 0,45.

The invention further provides the use of a polyoxylakyleneamine phosphonate as a retardant additive in a composition comprising at least one hydraulic binder and water.

The use according to the invention is particularly interesting in the field of construction and civil engineering, or for cementing wells for the extraction of oil and/or gas.

Preferably, the polyoxyalkyleneamine alkylene phosphonate is added to the composition comprising at least one hydraulic binder and water in form of an aqueous solution.

The use of these additives is effective at low/medium temperatures, notably between 40 and 140°C, and compatible with other additives currently used in slurry formulation, such as crosslinked polyvinylalcohol (PVA). Further, these retardant additives do no appear to affect the rheology of the slurry. Finally, using these retardant additives, less quantity of additives is required than with commercial additives for the same efficiency.

Other advantages and characteristics of the invention will become more clearly apparent on reading the detailed description which will follow.

As used above, and throughout the description of the invention the following terms, unless otherwise indicated, shall be understood to have the following meanings:

"W/C ratio" means the mass ratio between water and cement in a cement composition.

«Alkyl» means an aliphatic hydrocarbon group which may be straight or branched having 1 to 20 carbon atoms in the chain. Preferred alkyl groups have 1 to 12 carbon atoms in the chain. «Branched» means that one or more lower alkyl groups such as methyl, ethyl or propyl are attached to a linear alkyl chain. «Lower alkyl» means about 1 to 4 carbon atoms in the chain which may be straight or branched. The alkyl may be substituted with one or more «alkyl group substituents» which may be the same or different, and include halo, cycloalkyl, hydroxy, alkoxy, amino, acylamino, aroylamino, carboxy, alkoxycarbonyl. Exemplary alkyl groups include methyl, trifluoromethyl, cyclopropylmethyl, cyclopentylmethyl, ethyl, *n*-propyl, *i*-propyl, n-butyl, t-butyl, n-pentyl, 3-pentyl.

«Alkylene» means a straight or branched bivalent hydrocarbon chain having from 1 to about 20 carbon atoms. The preferred alkylene groups are the lower alkylene groups having from 1 to about 12 carbon atoms. Exemplary alkylene groups include methylene, ethylene, propylene and i-propylene.

The polyoxyalkyleneamine alkylene phosphonate additives may be prepared in a way conventional in the field.

A particularly easy and versatile access route to these compounds is provided by phosphonoalkylation of polyoxyalkyleneamines. Polyoxyalkyleneamines are known and some are for example available under the trademark JEFFAMINE®.

Compounds of the polyoxyalkyleneamines family contain primary amino groups attached to the terminus of a polyether backbone. They are thus "polyether amines." There are several families of polyoxyalkyleneamines, that differ

in the polyalkylene structure, and/or the number of amine groups.

The polyether backbone is based either on propylene oxide (PO), ethylene oxide (EO), or mixed EO/PO, or blocks of EO and PO, propylene oxide (PO) being preferred.

The polyoxyalkyleneamines may have one, two or three amine groups. Those having two terminal amine groups are preferred.

The phosphonoalkylation may conveniently be carried out by reaction with phosphoric acid and aldehyde in acid medium.

The reaction generally proceeds smoothly and rapidly and completely to yield the corresponding alkylene phosphonate.

Likely impurities in the product are small quantities of unreacted phosphonic acid, phosphoric acid, and trace quantities of hydrochloric acid. All three will be present as partially neutralised sodium salts in the final product. The product may thus be used without further purification.

Particularly preferred additives are polyoxyalkyleneamine methylene phosphonates. These may be obtained by reaction of a polyoxyalkyleneamines compound with phosphoric acid and formaldehyde in acid conditions.

The additive can be used in the free acid form or as a partial or full alkali metal, alkaline earth metal or ammonium salt, such as a sodium, potassium or ammonium salt.

Preferably, the alkali metal salts are sodium or potassium salts. With regard to the ammonium salts, they are of the $NR_4^+$ type in which the R radicals, which are identical or different, represent preferably hydrogen atoms or alkyl groups.

The composition used according to the invention comprises at least one hydraulic binder. Any conventional compound capable of reacting and hardening when it is in the presence of water can be used.

Thus, compounds based on silicon, aluminum, calcium, oxygen and/or sulfur may be suitable for the implementation of the invention. For example, compounds based on calcium silicate (Portland cement), on pozzolana or on gypsum, hydraulic binders based on phosphate and hydraulic binders based on calcium silicate are preferred. Likewise, it would not be departing from the scope of the present invention to employ hydraulic binders of phosphorus/magnesium type.

According to one embodiment of the invention, the composition is such that, per 100 parts by weight of hydraulic binder, the additive is present between 0,01 and 15 parts by weight, more particularly between 0,05 and 10 parts by weight, preferably between 0,1 and 8 parts by weight and more preferably still between 0,5 and 5 parts by weight.

It should be noted that the composition according to the invention can further comprise additives which are conventional in the field, for example setting retarders or accelerators, dispersants, antifoam agents, defoamers, viscosity modifiers, thickeners, air entertainers, agents which prevent migration of gases, and the like.

Usually, the total content of these additives, when they are present, does not exceed 40% by weight of the hydraulic binder.

In addition, the composition according to the present invention can comprise fillers. Mention may be made, as nonlimiting examples of inorganic fillers capable of being used, of calcium carbonate, fly ash, silica, fumed silica, clays (kaolin, metakaolin, bentonite, sepiolite, wollastonite), mica, feldspar, silicate, glass, titanium dioxide, aluminum or magnesia.

The mean size of inorganic fillers is advantageously less than or equal to 120 $\mu$m, preferably less than or equal to 80 $\mu$m.

The content of the fillers in the cement, when they are present, varies according to the subsequent applications for which the cement is intended. Likewise, according to whether it is desired to render the cement denser or lighter, inorganic or organic fillers can be employed.

Here again, without intending to be limited thereto, the content of fillers represents at most the same weight as the hydraulic binder.

With regard to the water content of the composition according to the invention, it can be easily determined by a person skilled in the art. It depends, inter alia, on the rheology and density characteristics desired for the composition.

The composition can be prepared by any means conventional in the field. Generally, the binder, the water, the retardant, optionally the surfactant and optionally the conventional additives are brought into contact with stirring.

The preparation of a premix of the additive, as an aqueous solution for instance, before introducing it into the composition according to the invention, may be advantageous.

The mixing of the various constituent components is carried out in a conventional way. A kneading and, if necessary, a de-agglomeration can in particular be carried out.

The mixing operation generally takes place at ambient temperature.

Once the contacting operation has been carried out, the composition can be formed, inter alia, by grouting, casting, extrusion or spraying.

The consolidated material obtained after the composition has hardened can, for example, be used in the field of the extraction of oil or gas or alternatively in that of construction and civil engineering.

The composition according to the invention and the material obtained after hardening can very particularly be used in the field of the drilling of wells for the extraction of oil and/or gas. The term "cementing fluids" is often used. Such fluids or compositions are described below in more detail.

Compositions suitable for the field of the drilling of wells for the extraction of oil and/or gas are known. Such compositions are disclosed, for example, in the document EP 0 621 247 and the document WO 01/09056. They comprise a hydraulic binder and generally other components. The hydraulic binder is preferably a cement, such as Portland cement. Other binders have been mentioned above.

The invention will appear more clearly from the following examples which are presented as an illustration only and are not to be considered as limiting the invention in its scope.

## EXAMPLES

Unless stated otherwise, proportions are indicated in gallons per sack of cement (gps).

## EXAMPLE 1

Preparation of Additive A

A heel of 145.2g of phosphorous acid and 109.6g (36%) of hydrochloric acid was charged to a glass lined reactor. 102.9g of poly(oxypropylene)diamine (Jeffamine® D230 from Huntsman) according to the formula :

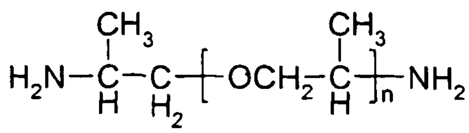

wherein n = 2,6;
were added at a controlled rate of 1 $mlmin^{-1}$. The mixture was then heated to reflux and a solution of 108.9g of formaldehyde 50% added at a controlled rate 2 $mlmin^{-1}$. Excess water, hydrochloric acid, and any methanol (from the formaldehyde) were distilled off under vacuum. The remaining solution was cooled down and neutralised to the requisite specification pH 4 with sodium hydroxide solution.

The product obtained is a clear straw yellow solution with 31% active content. The product may be used without further purification.

## EXAMPLE 2

Preparation of Additive B

A heel of 114g of phosphorous acid and 86g (36%) of hydrochloric acid was charged to a glass lined reactor. To this mixture, 139g of poly(oxypropylene)diamine (Jeffamine® D400 from Huntsman) of the formula :

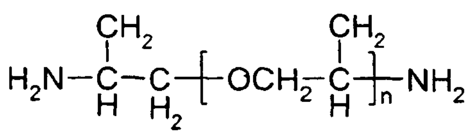

wherein n = 6,1;
were added at a controlled rate of 1 $mlmin^{-1}$. The mixture was then heated to reflux and a solution of 85.2g of formaldehyde 50% added at a controlled rate 2 $mlmin^{-1}$. Excess water, hydrochloric acid, and any methanol (from the formaldehyde) were distilled off under vacuum. The remaining solution was cooled down and neutralised to the requisite specification pH 4 with sodium hydroxide solution.

The product obtained is a clear pale amber solution with 56 % active content. The product may be used without further purification.

**EXAMPLES 3 to 11**

A cement slurry was prepared according to the general composition resumed in table 1, as follows, with concentrations of additive varying from 0 to 4.5 ml/kg (0 to 0,05 gps). as set out in Table 2.

Beforehand, the crystalline silica (from Schlumberger) was dispersed in water using a Chandler mixer (Constant Speed Mixer Model 3060 - Hilton) during 5 min at 3000 rpm. The other additives were then added without agitation and the mixture was homogenised for a few seconds at 3000 rpm.

The cement slurry was prepared according to the API norm (section 5 to API recommended practice 10B). The cement was added to the mixture of all liquid components while mixing for 25 s at 3000 rpm and again for 35s at 12000 rpm to homogenise all the cement components.

Table 1: Cement slurry composition

| | **Function** | **In [g]** | **In [ml/lkg] (gps)** |
|---|---|---|---|
| Portland Cement (API Oilwell cement Class G from Dyckerhoff) | consolidation | 806,3 g | W/C = 0,42 |
| Water | | 341,7 g | |
| Polypropylene glycol | Anti-foaming | 5,03 g | 5.58<br>10,0621 |
| Crystalline Silica (CAS 14808-60-7) | Anti-settling | 1,61 g | 0,18<br>(0,002) |
| Additive (active content) | Retardant | 0 to 1,7 g | 0 to 4,5<br>(0 to 0,05) |

In order to serve as a reference, the same cement compositions were prepared once without retardant (example 3) and with different dosages of a classical polynaphtalene sulfonate additive (example 4 to 6) containing calcium lignosulfonate and sodium lignosulfonate (active content 52 %), referred to as "REF" below.

Table 2:

| **EXAMPLE** | **Additive** | **Concentration** [ml/kg] (active gps) | **Setting time** (h) |
|---|---|---|---|
| **Ex. 3** | - | - | 2.5 |
| **Ex. 4** | REF | 0.45 (0,005) | 3.0 |
| **Ex. 5** | REF | 0.68 (0,00751 | 3.4 |
| **Ex. 6** | REF | 4.5(0.05) | 25 |
| **Ex. 7** | A | 0.23 (0,0025) | 4.6 |
| **Ex. 8** | A | 0.45 (0,0051 | 8.6 |
| **Ex. 9** | A | 0.9 (0,01) | 36 |
| **Ex. 10** | B | 0.21 (0.0023) | 8.7 |
| **Ex. 11** | B | 0,41 (0,0045) | 36 |

The rheological properties and setting times of the cement compositions were determined and compared with those prepared with a classical retardant and prepared without additive.

a. Setting time

The setting times were measured by following the solidification of cement slurry, which is an exothermic process. Therefore, an increase in temperature is an indication of the time required for the cement to get solidified. The setting time was measured according to the following protocol :

50 ml of cement slurry are placed into a bath at 80°C equipped with a thermocouple (Hanna HI 92704C). The temperature of the slurry was measured every 2 min. The setting time was extracted from the data as follows. The setting time is taken as the time when the higher temperature is reached during the immersion of the cement slurry into the bath.

The different compositions tested and their respective setting times are summarized in the table 2.

b. Rheology profile

Further, the viscosity of the cement slurry with time (rheology profile) was measured for different compositions.

The rheology profile of the cement compositions was measured after conditioning at 80°C. The viscosity is measured at 80°C on a rotational viscometer (Chan 35 rheometer).

The sample is confined between two concentric cylinders one of which is rotating at a constant rotational velocity. The initial instrument dial readings were taken 10 seconds after continuous agitation at the lowest speed. All the remaining readings were taken first in ascending order, and then in descending order, after continuous rotation of 10s seconds at each speed. Results are expressed using the Bingham model:

$$PV = \theta 600 - \theta 300 \text{ (cP)}$$

$$Ty = \theta 300 - PV \text{ (1b/100 ft}^2\text{)}$$

c. Gel strength

Finally, the gel strength of the gel was measured as indicated in the norm API sect 10B 12.7.1. The results are given on the following table 3.

Table 3:

| EXAMPLE | Additive | PV (cps) | Ty [Pa] *(lb/100ft²)* | Gel 0 |
|---|---|---|---|---|
| **Ex. 3** | - | 38 | 45.5 (95) | 150 |
| **Ex. 7** | A | 35 | 46.9(98) | 130 |
| **Ex. 9** | A | 26 | 42.1 (88) | 130 |
| **Ex. 10** | B | 42 | 45.0 (94) | 120 |
| **Ex. 11** | B | 52 | 41.2 (86) | 130 |

It appears from the results that for a targeted setting time, the rheology profile obtained with an additive according to the invention is similar to the one obtained without additive.

Hence, the use of described additives allows a better time management for identical retardant dosage compared to commercial retardants. Therefore, a lower additive concentration allows for equivalent time control.

Also, the rheology profile with an additive according to the invention is not impacted by a change in additive concentration: with the described additives, setting time management does not interfere with rheology management. Therefore, the described additives provide the flexibility to manage independently different properties.

**EXAMPLE 12 to 18**

Preparation of a cement slurry

A cement slurry was prepared according to the composition resumed in table 4, as follows, with concentrations of additive varying from 0 to 0,9 g (0 to 0,012 gps active), as set out in table 5.

All the liquid additives (polypropylene glycol, polynaphtalene sulfonate reticulated polyvinyl alcool and the additive) were mixed with the water during 10 s at 3000 rpm. Then the cement was added in 25 s at 3000 tr/min. The complete mixture was then left for 35 seconds at 12000 rpm, according to the API norm (section 5 to API recommended practice 10B).

The cement slurry was then conditioned at 80°C during 20 min at 150 rpm, as described in the above API norm.

Table 4 : Cement slurry composition

| | Function | In g | In [ml/kg] (gps) |
|---|---|---|---|
| Portland Cement (API Oilwell cement Class G from Dyckerhoff) | consolidation | 781,5 g | W/C = 0,31 |
| Water | | 242,3 g | |
| Polypropylene glycol | Anti-foaming | 2,1 g | 2.43 (0,027) |
| Polynaphtalene Sulfonate CAS 9008-63- | Dispersant | 5,2 g | 6,0 (0,067) |
| Crosslinked polyvinylalcool | Filtrate control | 105,1 g | 120,6 (1,34) |
| Additive (active content) | Retardant | 0 to 0,9 g | 0 to 1,1 (0 to 0,012) |

In order to serve as a reference, the same cement compositions were prepared without retarder and with a classical polynaphtalene sulfonate retardant (active content 52 %) containing calcium ligno sulfonate and sodium ligno sulfonate, in varying concentration (examples 12 to 14).

The rheological properties and setting times of cement compositions containing the additives were studied and compared with those prepared with a classical retarder and prepared without additive.

For most compositions, the setting time was measured as described above. The measured setting times are summarized in table 5.

Table 5:

| EXAMPLE | Additive | Concentration | Setting time |
|---|---|---|---|
| **Ex. 12** | REF | 0,006 | N.D. |
| **Ex. 13** | REF | 0,012 | 9.1 |
| **Ex. 14** | REF | 0,012 | 9.3 |
| **Ex. 15** | A | 0,006 | N.D. |
| **Ex. 16** | B | 0,004 | 5.3 |
| **Ex. 17** | B | 0,006 | 12.3 |
| **Ex. 18** | B | 0,006 | 13.1 |

The rheology profile of the cement slurry after conditioning at 80°C was determined for some compositions as described above. The results are summarized in table 6.

Table 6:

| EXAMPLE | Additive | **PV** (cps) | **Ty** [Pa] (*lb/100ft$^2$*) | Gel 0 |
|---|---|---|---|---|
| **Ex. 12** | REF | N.D. | N.D | N.D. |
| **Ex. 13** | REF | 43 | 1.4 (3) | 80 |
| **Ex. 15** | A | 39 | 2.4 (5) | 80 |
| **Ex. 16** | B | 33 | 1.4 (3) | 50 |
| **Ex.17** | B | 33 | 1.4 (3) | 70 |

It may be concluded that with a different cement composition, the use of the additives of the invention allows also for a better time management at equal concentration of retardant compared to the reference product. Indeed, about half the additive concentration of the described additive is necessary for equivalent time control.

For a targeted setting time, the rheology profile obtained with described additive is similar to the one obtained with commercial retardant. With the additive A, the rheology profile is exactly the same while it is slightly modified with the additive B.

Also, the rheology profile with the described additives is not impacted by a change in additive concentration: with the described additives, setting time management does not interfere with rheology management. The described additives provide the flexibility to be able to manage independently properties.

## Claims

1. A composition comprising a hydraulic binder, water and a polyoxyalkyleneamine alkylene phosphonate as a retardant additive.

2. The composition according to claim 1, wherein the polyoxyalkyleneamine alkylene phosphonate comprises at least one group of general formula (Ia) :

$$-[-OR4\ -]_N\text{-}NR^7{}_{(2\text{-}a)}(\text{-}R^5\text{-}PO_3M_2)_a \qquad \text{(Ia)}$$

wherein:

- a is an average number of from above 0 to 2;
- $R^4$ and $R^5$, identical or different, are alkylene groups;
- $R^7$ is hydrogen or an alkyl group;
- M is hydrogen or a monovalent cation; and
- n is an average number from 1 to 50.

3. The composition according to claim 1 or 2, wherein the polyoxyalkyleneamine alkylene phosphonate has one of the following general formulae (Ib) or (Ic):

$$(M_2O_3P\text{-}R^5\text{-})_aR^7{}_{(2\text{-}a)}N\text{-}R^3\ \text{-}[\text{-}OR^4\text{-}]_n\text{-}NR^7\ {}_{(2\text{-}a)}(\text{-}R^5\text{-}PO^3M_2)_a \qquad \text{(Ib)}$$

$$R^8\text{-}[\text{-}OR^4]_n\text{-}NR^7{}_{(2\text{-}a)}(\text{-}R^5\text{-}PO_3M_2)_a \qquad \text{(Ic)}$$

wherein:

- a, identical or different, is an average number of from above 0 to 2
- $R^3$ to $R^5$, identical or different, are alkylene groups;
- $R^7$ is hydrogen or an alkyl group;
- $R^8$ is an alkyl group, preferably a methyl group;
- M is hydrogen or a monovalent cation; and
- n is an average number from 1 to 50.

4. The composition according to any of claims 1 to 3, wherein the polyoxyalkyleneamine alkylene phosphonate has the general formula (I) :

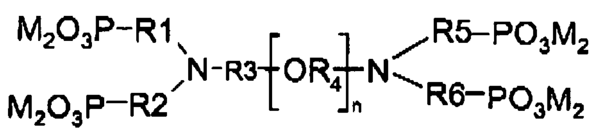

(I)

wherein :

$R^1$ to $R^6$, identical or different, are alkylene groups or a bond
M is a monovalent metal cation, ammonium or hydrogen; and
n is an average number from 1 to 50.

5. The composition according to any of claims 1 to 4, wherein one or more of $R^1$, $R^2$, $R^5$ and $R^6$ is methylene.

6. The composition according to any of claims 1 to 5, wherein $R^3$ and $R^4$ is ethylene and/or propylene.

7. The composition according to any of claims 1 to 6, wherein the polyoxyalkyleneamine alkylene phosphonate has the general formula (II)

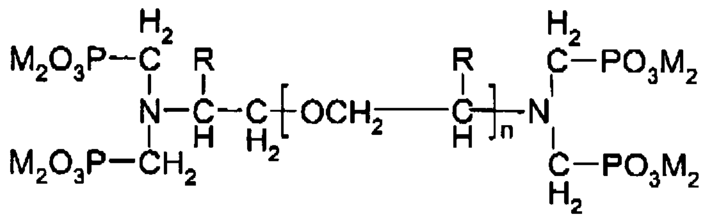

(II)

wherein :

n and M are as defined in claim 2 ; and
R, identical or different, is H or a methyl group.

**8.** The composition according to any of claims 1 to 7, wherein M is an alkali metal ion or ammonium.

**9.** The composition according to claim 8, wherein M is $Na^+$ or $NH_4^+$.

**10.** The composition according to any of claims 1 to 9, wherein n is 1 to 20.

**11.** The composition according to claim 10, wherein n is 2 to 8.

**12.** The composition according to any of claims 1 to 11, comprising 0,001 to 0,05 gps active polyoxyalkyleneamine alkylene phosphonate.

**13.** The composition according to any of claims 1 to 12, further comprising a fluid-loss control agent.

**14.** The composition according to claim 13, wherein the fluid loss control agent is a film forming agent, preferably a film forming polymer, such as a latex polymer, for example reticulated polyvinylalcohol.

**15.** The composition according to any of claims 1 to 14, wherein the composition is a fluid for cementing wells for the extraction of oil and/or gas.

**16.** The composition according to any of claims 1 to 15, wherein the hydraulic binder is a cement.

**17.** Composition according to claim 16, wherein the hydraulic binder is a Portland cement.

**18.** The composition according to claims 16 or 17, having a W/C ratio of 0,3 to 0,45.

**19.** Composition according to any of claims 1 to 18, further comprising at least one additive chosen from dispersants, antifreezers, water retainers, setting accelerators or retarders, or agents for controlling foaming.

**20.** Use of a polyoxyalkyleneamine alkylene phosphonate as a retardant additive in a composition comprising at least one hydraulic binder and water.

**21.** Use according to claim 20 in the field of construction and civil engineering.

**22.** Use according to claim 20 in a fluid for cementing wells for the extraction of oil and/or gas.

**23.** Use according to any of claims 20 to 22, wherein the polyoxyalkyleneamine alkylene phosphonate is added in form of an aqueous solution to the composition comprising at least one hydraulic binder and water.

**24.** Use according to any of claims 20 to 23, at a temperature of about 40 to 140°C.

**Patentansprüche**

**1.** Zusammensetzung mit einem Bindemittel, Wasser und Polyoxyalkylenaminalkylenphoshponat als verzögerndes

Zusatzmittel.

2. Zusammensetzung nach Anspruch 1, wobei das Polyoxyalkylenaminalkylenphoshponat wenigstens eine Gruppe mit der allgemeinen Formel (Ia)

$$-[-OR^4-]_n-NR^7_{(2-a)}(-R^5-PO_3M_2)_a \quad \text{(Ia)}$$

aufweist, wobei

- a eine Durchschnittszahl von über 0 bis 2 ist;
- $R^4$ und $R^5$ gleiche oder unterschiedliche Alkylengruppen sind;
- $R^7$ Wasserstoff oder eine Alkylgruppe ist;
- M Wasserstoff oder ein monovalentes Kation ist; und
- n eine Durchschnittszahl von 1 bis 50 ist.

3. Zusammensetzung nach Anspruch 1 oder 2, wobei das Polyoxyalkylenaminalkylenphoshponat eine der folgenden allgemeinen Formeln (Ib) oder (Ic)

$$(M_2O_3P-R^5)_aR^7_{(2-a)}N-R^3-[-OR4-]_n-NR^7{}_{(2-a)}(-R^5-PO_3M_2)_a \quad \text{(Ib)},$$

$$R^8-[-OR^4-]_n-NR^7_{(2-a)}(-R^5-PO_3M_2)_a \quad \text{(Ic)}$$

aufweist, wobei

- a eine immer gleiche oder unterschiedliche Durchschnittszahl von über 0 bis 2 ist;
- $R^3$ bis $R^5$ gleiche oder unterschiedliche Alkylengruppen sind;
- $R^7$ Wasserstoff oder eine Alkylgruppe ist;
- $R^8$ eine Alkylgruppe und vorzugsweise eine Methylgruppe ist;
- M Wasserstoff oder ein monovalentes Kation ist; und
- n eine Durchschnittszahl von 1 bis 50 ist.

4. Zusammensetzung nach einem der Ansprüche 1 bis 3, wobei das Polyoxyalkylenaminalkylenphoshponat die allgemeine Formel (I)

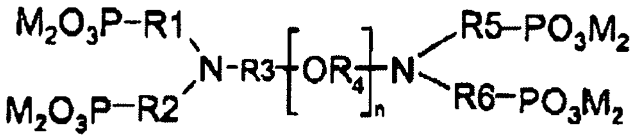

(I)

aufweist, wobei

- $R^1$ bis $R^6$ gleiche oder unterschiedliche Alkylengruppen oder eine Bindung sind;
- M ein monovalentes Metallkation, Ammonium oder Wasserstoff ist; und
- n eine Durchschnittszahl von 1 bis 50 ist.

5. Zusammensetzung nach einem der Ansprüche 1 bis 4, wobei eine oder mehrere der Gruppen $R^1$, $R^2$, $R^5$ und $R^6$ Methylen ist/sind.

6. Zusammensetzung nach einem der Ansprüche 1 bis 5, wobei $R^3$ und $R^4$ Ethylen und/oder Propylen sind.

7. Zusammensetzung nach einem der Ansprüche 1 bis 6, wobei das Polyoxyalkylenaminalkylenphoshponat die allgemeine Formel (II)

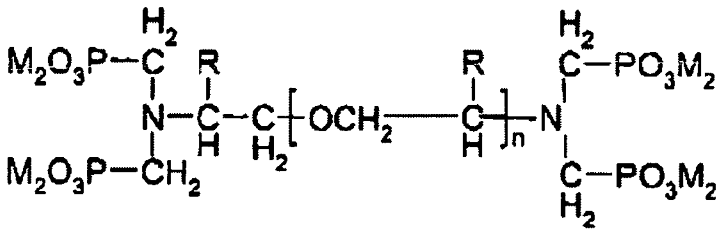

(II)

aufweist, wobei

- n und M wie in Anspruch 2 definiert sind;
- R Wasserstoff oder eine Methylgruppe ist, wobei die R-Gruppen gleich oder unterschiedlich sind.

**8.** Zusammensetzug nach einem der Ansprüche 1 bis 7, wobei M ein Alkalimetallion oder Ammonium ist.

**9.** Zusammensetzug nach Anspruch 8, wobei M $Na^+$ oder $NH_4^+$ ist.

**10.** Zusammensetzug nach einem der Ansprüche 1 bis 9, wobei n zwischen 1 und 20 liegt.

**11.** Zusammensetzug nach Anspruch 10, wobei n zwischen 2 und 8 liegt.

**12.** Zusammensetzug nach einem der Ansprüche 1 bis 11 mit 0,001 bis 0,05 gps an aktivem Polyoxyalkylenaminalkylenphoshponat.

**13.** Zusammensetzug nach einem der Ansprüche 1 bis 12, die ferner einen Wirkstoff zur Steuerung des Fluidverlustes aufweist.

**14.** Zusammensetzung nach Anspruch 13, wobei der Wirkstoff zur Steuerung des Fluidverlustes ein einen Film bildender Wirkstoff, vorzugsweise ein einen Film bildendes Polymer, wie beispielsweise ein Latexpolymer, und beispielsweise ein vernetzter Polyvinylalkohol ist.

**15.** Zusammensetzung nach einem der Ansprüche 1 bis 14, wobei die Zusammensetzung ein Fluid zum Zementieren von Förderlöchern für Öl und/oder Gas ist.

**16.** Zusammensetzung nach einem der Ansprüche 1 bis 15, wobei das hydraulische Bindemittel ein Zement ist.

**17.** Zusammensetzung nach Anspruch 16, wobei das hydraulische Bindemittel Portlandzement ist.

**18.** Zusammensetzung nach einem der Ansprüche 16 oder 17 mit einem W/C-Verhältnis von 0,3 bis 0,45.

**19.** Zusammensetzung nach einem der Ansprüche 1 bis 18, die ferner wenigstens ein Zusatzmittel aufweist, das aus der Gruppe der Dispergiermittel, der Frostschutzmittel, der Wasser bindenden Mittel, der Abbindebeschleuniger oder -verzögerer, oder der Mittel zur Steuerung der Schaumbildung ausgewählt ist.

**20.** Verwendung von Polyoxyalkylenaminalkylenphoshponat als verzögerndes Zusatzmittel in einer Zusammensetzung, die wenigstens ein hydraulisches Bindemittel und Wasser enthält.

**21.** Verwendung gemäß Anspruch 20 im Bereich des Baugewerbes und des Bauingenieurwesens.

**22.** Verwendung gemäß Anspruch 20 in einem Fluid zum Zementieren von Förderlöchern für Öl und/oder Gas.

**23.** Verwendung nach einem der Ansprüche 20 bis 22, wobei das Polyoxyalkylenaminalkylenphoshponat der Zusammensetzung, die ein hydraulisches Bindemittel und Wasser enthält, in Form einer wässerigen Lösung zugesetzt wird.

**24.** Verwendung gemäß einem der Ansprüche 20 bis 23 bei einer Temperatur von etwa 40°C bis 140°C.

## Revendications

1. Composition comprenant un liant hydraulique, de l'eau et un polyoxyalkylèneamine alkylène phosphonate en tant qu'additif retardateur.

2. Composition selon la revendication 1, dans laquelle le polyoxyalkylèneamine alkylène phosphonate comprend au moins un groupe de formule générale (Ia) :

$$-[OR^4-]_n-NR^7_{(2-a)}(-R^5-PO_3M_2)_a \qquad (Ia)$$

où

a est un nombre moyen d'environ 0 à 2;
$R^4$ et $R^5$, identiques ou différents, sont des groupes alkylène ;
$R^7$ est un hydrogène ou un groupe alkyle ;
M est un hydrogène ou un cation monovalent ; et
n est un nombre moyen de 1 à 50.

3. Composition selon la revendication 1 ou 2, dans laquelle le polyoxyalkylèneamine alkylène phosphonate a l'une des formules générales suivantes (Ib) ou (Ic) :

$$(M_2O_3P-R^5 -)_aR^7_{(2-a)}N-R^3-[-OR^4-]_n-NR^7_{(2-a)}(-R^5 -PO_3M_2)_a \qquad (Ib)$$

$$R^8 -[-OR^4 -]_n-NR^7{}_{(2-a)}(-R^5-PO_3M_2)_a \qquad (Ic)$$

où

a, identique ou différent, est un nombre moyen d'environ 0 à 2 ;
$R^3$ à $R^5$, identiques ou différents, sont des groupes alkylène ;
$R^7$ est un hydrogène ou un groupe alkyle ;
$R^8$ est un groupe alkyle, de préférence un groupe méthyle ;
M est un hydrogène ou un cation monovalent ; et
n est un nombre moyen de 1 à 50.

4. Composition selon l'une quelconque des revendications 1 à 3, dans laquelle le polyoxyalkylèneamine alkylène phosphonate a la formule générale (I) :

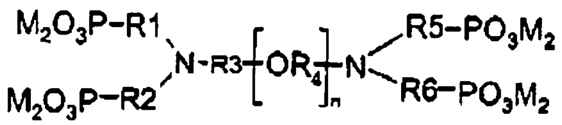

(I)

où

$R^1$ à $R^6$, identiques ou différents, sont des groupes alkylène ou une liaison,
M est un cation métallique monovalent, un ammonium ou un hydrogène; et
n est un nombre moyen de 1 à 50.

5. Composition selon l'une quelconque de revendications 1 à 4, dans laquelle un ou plusieurs parmi $R^1$, $R^2$, $R^5$ et $R^6$ est le méthylène.

6. Composition selon l'une quelconque de revendications 1 à 5, dans laquelle $R^3$ et $R^4$ est l'éthylène et/ou le propylène.

7. Composition selon l'une quelconque des revendications 1 à 6, dans laquelle le polyoxyalkylèneamine alkylène phosphonate a la formule générale (II):

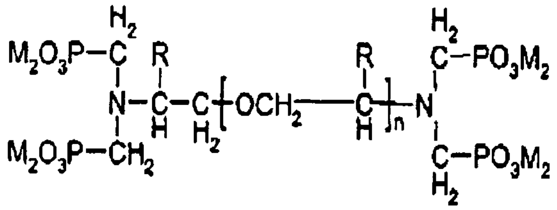

(II)

où :

n et M sont tels que définis dans la revendication 2 ; et
R, identique ou différent est un H ou un groupe méthyle.

**8.** Composition selon l'une quelconque des revendications 1 à 7, dans laquelle M est un ion de métal alcalin ou un ammonium.

**9.** Composition selon la revendication 8, dans laquelle M est $Na^+$ ou $NH_4^+$.

**10.** Composition selon l'une quelconque de revendications 1 à 9, dans laquelle n est égal à 1 à 20.

**11.** Composition selon la revendication 10, dans laquelle n est égal à 2 à 8.

**12.** Composition selon l'une quelconque de revendications 1 à 11, comprenant 0,001 à 0,05 gps de polyoxyalkylèneamine alkylène phosphonate actif.

**13.** Composition selon l'une quelconque des revendications 1 à 12, comprenant en outre un agent de régulation de perte de fluide.

**14.** Composition selon la revendication 13, dans laquelle l'agent de régulation de perte de fluide est un agent filmogène, de préférence un polymère filmogène, tel qu'un polymère de latex, par exemple l'alcool polyvinylique réticulé.

**15.** Composition selon l'une quelconque de revendications 1 à 14, dans laquelle la composition est un fluide de cimentation de puits pour l'extraction de pétrole et/ou de gaz.

**16.** Composition selon l'une quelconque de revendications 1 à 15, dans laquelle le liant hydraulique est un ciment.

**17.** Composition selon la revendication 16, dans laquelle le liant hydraulique est un ciment Portland.

**18.** Composition selon les revendications 16 ou 17, ayant un rapport W/C de 0,3 à 0,45.

**19.** Composition selon l'une quelconque des revendications 1 à 18, comprenant en outre au moins un additif choisi parmi des dispersants, des antigels, des rétenteurs d'eau, des accélérateurs ou retardateurs de prise, ou des agents pour contrôler le moussage.

**20.** Utilisation d'un polyoxyalkylèneamine alkylène phosphonate en tant qu'un additif retardateur dans une composition comprenant au moins un liant hydraulique et de l'eau.

**21.** Utilisation selon la revendication 20, dans le domaine de la construction et du génie civil.

**22.** Utilisation selon la revendication 20, dans un fluide de cimentation de puits pour l'extraction de pétrole et/ou de gaz.

**23.** Utilisation selon l'une quelconque des revendications 20 à 22, dans laquelle le polyoxyalkylèneamine alkylène phosphonate est ajouté sous la forme d'une solution aqueuse à la composition comprenant au moins un liant hydraulique et de l'eau.

**24.** Utilisation selon l'une quelconque de revendications 20 à 23, à une température d'environ 40°C à 140°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9944962 A
- WO 9933763 A
- EP 0177308 A
- EP 0621247 A
- WO 0109056 A